# EUROPEAN PATENT APPLICATION

(11) **EP 2 662 438 A1**
(43) Date of publication of application: **13.11.2013**
(21) Application number: 12166970.9
(22) Date of filing: 07.05.2012
(51) Int. Cl.: C12G 3/00, C12G 3/04, A23L 1/054, A23L 1/0562

(54) **Thermoreversible gelatinized alcohol-containing product**

(71) Applicant: Pernod Ricard, 75016 Paris (FR)
(72) Inventor: Jones, Kathy, Amherstburg, Ontario N9V 3X9 (CA); Crowder, LISA, Lasalle, Ontario N9J 3S9 (CA); Doyle, DAVID, N9B 3K6 WINDSOR ONTARIO (CA)
(74) Representative: Jouanneau, Lionel

(57) **Abstract**

The present invention relates to a thermoreversible gelatinized alcohol-containing product comprising water, gelatin, spirit or ethyl alcohol, and an acidifying agent, wherein the product is in the form of a liquid at room temperature and in the form of a gel between 0°C and 10°C, as well as to the process fro preparing such a product.

## Description

This invention relates to a thermoreversible gelatinized alcohol-containing product and to a method for the manufacture of this product.

Gelatinized products are known in the field. The central ingredient in these products is gelatin.

Gelatin is an ingredient able to change a liquid into a solid gel by raising and then lowering the temperature. Gelatin is obtained by a controlled hydrolysis of protein derived from collagen. Collagen is widely found in nature where it is a major constituent of skin, bones, and connective tissue in animals such as pigs, cows, and fish. Gelatin is extracted from collagen by an acid - heating mechanism with the pH of 4 and a temperature of 50°C. The resulting gelatin from the initial collagen source is composed of a unique sequence of amino acids in which the majority of the amino acids are glycine (26%), proline (16%), and hydroxyproline (14%). Other minor amino acids are found in gelatin such as cystine. The sequence and gelling characteristics of the gelatin are inherent to the initial collagen source, type of pre-treatment, and gelatin extraction conditions during manufacturing. The amino acids in gelatin form chains of polypeptides which range from a few thousand up to several hundred thousand Daltons. This range of molecular weight distribution affects the physical properties of the gelatin including viscosity and gel strength values.

As gelatin is insoluble, when it is added to cold water, the gelatin falls to the bottom, swells, and absorbs 5 to 10 times its weight in water. As the mixture is heated above 40°C for over 30 minutes, the swollen polypeptide particles break apart and become suspended in the water. However, the individual molecules remain solid. Gelatin needs to be added to hot water if dissolution is expected.

When cooled down, gelatin forms a thermoreversible gel. Gelatin gels exist over only a small temperature range, the upper limit being the melting point of the gel, which depends on gelatin grade and concentration and which is generally between 27 and 32°C and the lower limit, the freezing point at which ice crystallizes.

Prior art has demonstrated a number of physical properties that affects the gelling strength of gelatin. For example, the hydrogen ion concentration of the solution affects the water molecule absorption within the protein lattice structure. The optimal pH for stiffening of gelatin ranges between 5.0 and 7.0. This is why gelatinous products ideally have a pH between 5.0 and 7.0. However, these can be a drawback, when consumers require "Jell-O Shots" with acidic fruit juices or citrus flavours such as lemons or oranges. In these cases, the stiffening properties of the gelatin are affected and it is difficult to obtain the desired consistency. This is also problematic for certain alcohol-containing gelatinous product in which acidifying agents (e.g. citric acid, malic acid, or tartaric acid) are present in order to achieve a specific flavor. In this case, the presence of the acidifying agents changes the isoelectric point of a preparation and this leads to a cloudy, opaque gelatinous product.

Gelling products with alcohol and water have been previously combined to form popular food products termed as "Jell-O Shots". "Jell-O Shots" are gelatinized products obtained by the mix of a commercially available powdered gelling product with a liquid. The concept is to prepare edible alcoholic products for social situations. Consumers can develop their own kind of "Jell-O Shots" through a process of bringing water to its boiling point, adding the powdered gelling product to the heated water, adding an ethyl alcohol-containing beverage of their choice to the mixture gelling product and heated water, pour the obtained mixture into a molded container, and then refrigerate. The liquid mixture converts from a liquid into a gel and take the shape of the molded container. When removed from the refrigerator, the gelatinized products so obtained keep their shape for a determined period of time. Products obtained according to this process spoil within days and nonconsumed products have to be discarded.

There are some additional drawbacks associated with the use of such a powdered gelling product. First, there is a safety risk in preparation of the "Jell-O Shot" in using hot water. Secondly, the process for preparing the "Jell-O Shots" can be time consuming and cumbersome for certain social situations. Furthermore, some of the ethyl alcohol-containing beverage may evaporate when added to the heated water, especially if the temperature of the water is above the boiling point of the alcoholic beverage (78.6 °C).

To obviate the drawbacks of the powdered gelling product, the food industry has tried to develop pre-made "Jell-O Shots". The final gelatinized products are commercialized within plastic containers. A gentle squeeze of the container dispenses the gelatinized product that can be sucked or eaten with a spoon. This is notably the case of the product described in the patent document US 2011/0129588, the food product being in a gelatinous state at room temperature.

This presents however the disadvantage of a restriction to the package shapes that have been developed by the manufacturer. If there is an occasion where a consumer wishes to create a "Jell-O Shot" in a specific form or shape then the pre-made versions can be restrictive.

All the above-mentioned concerns must be solved to propose a gelatinized product that is in the form of a liquid at room temperature and converts into a gel when refrigerated. Such a product presents the advantage of allowing the consumers to give the product a shape of their choice. The technical difficulties here are that first, the thermal history of the preparation can affect the gelling capacity of the product and secondly, that it is very difficult to propose a gelatinized product that contains alcohol, because alcohol affects the gel formation over the heating and cooling cycle.

It is also an object of the present invention to propose a gelatinized product that is thermoreversible and return into a liquid after a determined period of time, for example one hour of time, at room temperature. Providing a product that can take the correct gel strength is also a concern. Indeed, the gel has to be sufficiently strong to be consistent and do not separate. At the same time, the gel has to be thermoreversible, that is to say the gel has to be capable to return to a liquid state after a determined period of time.

It is a further object of the present invention to propose a thermoreversible gelatinized product that contains alcohol. Products made of alcohol very often contain acidifying agents, such as malic acid or citric acid for palatable reasons. Citric acid is known to influence the gel strength. At the same time high concentration of acidifying agents is known to produce an opaque gelatinized product. There is a technical difficulty in determining the correct pH of the final product in order to be able to propose a product containing alcohol at various concentration, including high alcohol content by volume, having a correct gel strength and pleasant taste.

The present invention relates to a gelatinized product which is in a liquid state on the shelf at a retail centre, or behind a bar, at room temperature and gives the consumer the option of dispensing the liquid into a molded container of their choosing when placed in a refrigerator for a determined period of time. The product then gelatinizes and forms a solid state. The product can then be removed from the refrigerator shaped to the molded container and consumed at room temperature. The product remains a solid for a determined period of time when placed at room temperatures, after removal from the refrigerator. Thereafter, it returns to a liquid form and can be for example poured again into the original container. The shaping process can be repeated at multiple new occasions. It is also to be noted that the product of the invention can be consumed either in a solid state with a spoon or by turning out the container or in its liquid state. The gelatinized products of the present invention lead to an acceptable result, in particular a product having the desired consistency after having been placed in a refrigerator for a determined period of time.

According to the present invention, the term "thermoreversible" means that is convertible from a liquid phase at room temperature to a gel phase when placed in the refrigerator and more generally when placed at a refrigerated temperature, that is to say a temperature lower than 10°C.

As mentioned above, temperature of the product will need to stay lower than the setting point of the gelled solution which for high alcohol containing solution is about 4°C.

Preferably, the product is under a gelled form between 0°C and 10°C, preferentially between 1°C and 7°C, most preferably between 1°C and 5°C, for example at 4°C, and that is convertible back to a liquid phase after a certain amount of time at room temperature. The gelatinized product of the present invention is liquid at room temperature and, when refrigerated, become a gel phase. The product of the present invention has a gel setting temperature below room temperature, comprised between 0°C and 10°C, preferentially between 1°C and 7°C, most preferably between 1°C and 5°C, for example at 4°C.

According to the present invention, the term "room temperature" means at or below 23°C, preferentially between 15°C and 22°C.

The term "gelatinized" is hereby intended to mean containing gelatin and being able to take the form of a gel under determined conditions. More precisely, the product of the invention solidifies when it is placed in the refrigerator for a determined period of time, for example when it is place at a temperature between 0 and 10°C for at least 2 hours, preferably at 4°C for at least 3 hours, more preferably at least 4 or 5 hours. This means that after having been poured into the desired container, the product is placed into the refrigerator and allowed to stay for at least 2 hours in order to convert from a liquid state to a solid, gelatinous one. The product of the invention can be stored in a solid form in its container in the refrigerator for an extended period of time, for example 10 hours, 1 day and even 1 month or more. The product of the invention has an extended shelf life.

The product of the invention also shows the ability to return to a liquid state when placed at room temperature. This is another advantage of the present invention. Conversion from the gel state to the liquid state occurs at room temperature after a determined period of time, for example after 1 hour at room temperature. This means that the gel formation hold up for at least 1 hour, preferably at least 1.25 hour, more preferably at least 1.5 hour, when removed from the refrigerator and placed at room temperature.

The present invention removes the need to heat water to prepare the food product and for the consumer to add ingredients. It also allows the consumers to pour the alcohol-containing product into their own containers for their convenience. Additionally, if product is not used in the solidified format it can be reused at a later time.

In order to achieve these features, the product of the present invention comprises gelatin. The gelatin component of the present invention can be of any kind. For example, the gelatin can be of animal origin or of vegetable origin. Gelatin can notably be sourced from bovine, swine and fish. Gelatin is defined by the so-called Bloom value. The Bloom value of gelatin is a measurement of the strength of a gel formed by a 6 and 2/3 % solution of the gelatin, that has been kept in a constant temperature bath at 10°C for 18 hours. A device called a Texture Analyzer is then used to measure the weight in grams that is required to depress a standard AOAC plunger 4 millimeters into the gel. If this procedure requires 200 grams, then the gelatin is a 200 bloom gelatin. According to the present invention, it is preferable to use a gelatin having a Bloom value ranging between 100 and 300, more preferably between 200 and 280, for example a gelatin having a Bloom value of 250.

The gelatin may be present in the product in an amount ranging from 0.6% to 3.3% (w/w), preferably from 0.8 to 3% (w/w), more preferably from 1 to 2.5% (w/w).

The product of the present invention also comprises spirit or ethyl alcohol. Types of ethyl alcohol used can be sourced from a number of types of spirit classes including neutral grain spirits (NGS), vodka, whisky, gin, rum, tequila, distilled spirit specialties, brandy, liqueurs, liquor, mescal, and wines. There is not a specific limitation for the type of alcoholic beverage used for the product of the present invention. If adjustment of the final alcoholic strength of the final product is needed, then additional cool water can be added to the formulation. The strength is determined by distillation and use of a density meter analyzer as indicated by regulatory authorities. The content of ethyl alcohol in the final product can range between 12% abv to 40% abv, preferably between 15 % abv to 40% abv. The content of ethyl alcohol in the final product can for example be 21 % abv.

The product of the present invention has a pH ≤ 5.0. Preferably, the pH of the present invention ranges between 3.5 and 4.5. More preferably, the pH of the present invention ranges between 3.5 and 4.0. The pH balance of the product needs to be adjusted to this range. This is done with the use of an acidifying agent. The change in pH associated with the use of an acidifying agent also impacts the effectiveness of the stabilizer to achieve optimum development of gel character and strength. The use of an acidifying agent is also important for designing the flavoring characteristics of the final product. Without acidifying agent, the resulting alcoholic product would likely be too sweet for most consumers. Citric acid is the preferred acidifying agent because of its high solubility and pleasant sour taste, but other acidifying agent can also be employed such as malic acid, tartaric acid, succinic acid, fumaric acid, phosphoric acid among others. Concentrations of acids are restricted to taste and regulation. The acidifying agent may be present in the product of the invention in an amount ranging from 0.04% to 1.0% w/v, preferably between 0.05% to 0.5% w/v and more preferably between 0.06% and 0.1% w/v. Acids may be added in a liquid or dry format at the processing step where the product is less than 55°C in temperature.

The product specified by this invention may also comprise a sweetening agent. The sweetening agents are added to the product for taste purpose. The sweet taste of the product according to the present invention can be assessed using the degree Brix (in short °Bx) that is a relative density scale. The degree Brix is a measurement of the percentage of sucrose by weight (grams per 100 milliliter of water) in a solution. Brix is measured using a refractrometer. One degree Brix (°Bx) equals one percent (%). The inventors have realized that sweetening agents, in particular their concentration in the final product, may also influence the strength of the gel. Different types of sweetening agents can be used according to the present invention. They can be from natural agricultural sources such as sugar cane, corn, sweet potato, stevia, sugar beets or honey; or they can be artificial sweeteners such as aspartame or neotame. If dietary is at stake, then artificial sweeteners or stevia are preferred. Examples of sweetening agents include fructose, dextrose, sucrose, high fructose corn syrups, can sugar, corn sugar, corn syrup, and the like or combination thereof. The sweetening agent may be present in the product of the invention in a quantity such that the Brix is comprised between 9% and 35%, preferably between 15 and 30%, more preferably between 20 and 28%.

In addition to gelatin, the product of the invention may comprise another additional gelling agent. This at least one additional gelling agent can improve the stability of the product, if needed, and act as a thickening agent. In other words, it can improve the uniformity and smoothness of the finished product and enhance the product's resistance to melting. Suitable additional gelling agents according to the present invention include agarose, carrageenan, pectin, methowylated pectin, a carrageenan-carob mixture, native or modified starch, native or modified cellulose, xanthan gum, arabic gum, acacia gum, gellan gum and guar gum, locust bean gum, or a combinaison thereof. The preferred additional gelling agents are gellan gum, ....The precise amount used depends on the percent sugars and alcohols in the mixture as well as the organoleptic properties sought. Too much stabilizer yields a product that will be considered too rubbery, too little and the product is too hard and coarse.

According to the present invention, the final product may also comprise preservatives in order to ensure microbial stability. Preservatives can be added and dissolved in the formulation when the mixture is below 55°C. Typical preservatives which can be added to the composition of the product include potassium sorbate and sodium benzoate. It is to be noted however that the formulations of the present invention are not restricted to this types of preservatives only.

Flavoring agents, also called flavors or flavoring ingredients, or flavoring formulations, may also be added to the product of the invention. Examples of flavoring ingredients that can be used in the composition of the product according to the present invention include natural flavors and artificial flavors. For example, natural juices from fruit, fruit concentrates or fruit extracts (such as coconut flakes) may be added to the composition. Alternatively, it is possible to add artificial flavoring agents. Combinations of both natural and artificial flavoring agents are also possible. Flavoring formulations according to the present invention can include a combination of any of the following flavorings: essential oils, natural extracts, juice concentrates and artificial flavorings. The flavouring agents may be in a powder form or in a liquid format. It is to be noted that adding a flavouring agent may influence the pH. To counter-balance the use of certain types of flavouring agents, it may be appropriate to add acid or base salts in the formulation, in order to optimize the performance of the gelatin and gelling agent mixture. All flavouring ingredients can be added at 55°C or below during the mixing process. Flavouring agents may be added in the formulation after the ethyl alcohol so as to ensure the clarity of the finished product. Some flavoring agents are only soluble in higher concentrations of ethyl alcohol. Examples of flavoring agents (but not limited to) may be citrus in origin, melons, apples, pears, chocolate, coffee, coconut, amaretto, berries, teas, spices, and nuts. Flavoring agents typically account for no more than 2.0% (w/w), more preferably less than 1.0% (w/w), and most preferably less than 0.5% (w/w).

Salts may also be added in the composition of the present invention. Salts may be for example selected in the group consisting of sulfates, citrates, tartrates, acetates, chloride, chlorate, nitrites, bromates, and iodates. The addition of salts may improve the rigidity of the gel.

Food colorants can also be added to the composition of the product of the present invention. Food colorants allow a control of the colour or turbidity of the product. For example, synthetic colors such as FD&C certified colors can be used in various concentrations to achieve a number of different color palates. Other colorants, notably from natural sources, include caramel or natural extracts. The colorant can be added any time below the temperature of 55°C.

Food particles such as fruit pieces, sweets, candies, cookies, lemon pulp, fruit pulp, chocolate shavings, gold shavings, coconut flakes or edible beads may also be added to the composition of the product according to the present invention.

Additionally, the present invention relates to a thermoreversible gelatinized alcohol-containing product, comprising:
- water,
- a gelling agent,
- spirit or ethyl alcohol, and
- an acidifying agent,
wherein the product has an alcohol strength comprised between 12 and 40% abv and a pH ≤ 5,
and wherein the product is in the form of a liquid at room temperature and in the form of a gel between 0°C and 10°C.

According to this embodiment, the gelling agent may be selected in the group consisting of agarose, gelatin, carrageenan, pectin, methowylated pectin, a carrageenan-carob mixture, native or modified starch, native or modified cellulose, xanthan gum, arabic gum, acacia gum, gellan gum and guar gum, locust bean gum, or a combinaison thereof.

Additionally, the present invention relates to a thermoreversible gelatinized alcohol-containing product, containing:
- water,
- a gelling agent,
- spirit or ethyl alcohol,
- an acidifying agent,
- a sweetening agent, and
- at least one additional component selected in the group consisting of salt, flavoring agent, coloring agent, edible food particles and preservative, or combination thereof,
wherein the product has an alcohol strength comprised between 12 and 40% abv and a pH ≤ 5,
and wherein the product is in the form of a liquid at room temperature and in the form of a gel between 0°C and 10°C.

The present invention relates to a thermoreversible gelatinized alcohol-containing product, containing:
- from 10% to 90% (w/w) of water, preferably from 30% to 70% (w/w),
- from 0.6% to 3.3% (w/w) of a gelling agent, preferably from 0.9% to 1.5% (w/w),
- from 9% to 34% (w/w) of spirit or ethyl alcohol, preferably from 12% to 18% (w/w),
- from 0.05% to 0.1 % (w/w) of an acidifying agent, preferably from 0.07% to 0.09% (w/w),
- from 0% to 57% (w/w) of a sweetening agent, preferably from 8% to 20% (w/w), and
- from 0% to 0.001 % (w/w), preferably from 0.0001 % to 0.0003% (w/w), of at least one additional component selected in the group consisting of salt, flavoring agent, coloring agent, edible food particles and preservative, or combination thereof
wherein the product has an alcohol strength comprised between 12 and 40% abv and a pH ≤ 5,
and wherein the product is in the form of a liquid at room temperature and in the form of a gel between 0°C and 10°C.

The present invention also relates to a method for preparing a thermoreversible gelatinized alcohol-containing product, being in the form of a liquid at room temperature and in the form of a gel between 0°C and 10°C.

The method of preparation of the product according to the present invention is in three steps.

The first step of the process consists in solubilizing the gelatin in water so as to obtain the liquid gelling part of the composition (Part A). More precisely, cold water is disposed in a tank equipped with an overhead mixer and then the gelatin powder is slowly added to the cold water under agitation. The mixture is then heated to 75-85°C (or above 85°C) during at least 5 minutes so as to ensure that the gelatin is solubilised. According to one embodiment of the present invention, another gelling agent may be used in the composition of the product according to the present invention in order to improve the overall stability of the final product. If so, then this other gelling agent may be added and dissolved into the hot water at this stage. The solution is then removed from the heat and allowed to cool to 55°C.

According to a first embodiment of the present invention, the second step of the process consists in mixing together the other components of the composition. More precisely, this step consist in preparing the second part of the composition (Part B) by blending together the spirit or ethyl alcohol, remaining water (QS), acidifying agents and optional ingredients (e.g. sweetening agents, flavoring agents, salts, coloring agents, preservative) in no specific order. Then part A is added to Part B and mixed for about 30 minutes.

According to a second embodiment of the present invention, the second step of the process consists in adding the other components one by one to the liquid gelling part of the composition (Part A), in no specific order, but only when part A is less than 55°C in temperature.

The third step consists in allowing the blend to cool down at room temperature. More precisely, the solution is allowed to cool to room temperature, between 15°C and 25°C.

If necessary, the solution is filtered, for example using a filter of 40µm, in order to remove particles that have not been dissolved.

The process of the present invention also possibly comprises a step consisting in the addition of edible food particles such as fruit pieces, sweets, candies, cookies, lemon pulp, fruit pulp, chocolate shavings, gold shavings, coconut flakes or edible beads. If the final product comprises such particles, then they have to be added after the filtration of the solution.

The edible product of the invention is then ready to be packaged in typical beverage containers.

The product that is liquid at room temperature can dispensed into a molded container at the discretion of the consumer. In that format, the consumer reduces the temperature of the product to a temperature comprised between 0°C and 10°C. At these temperatures, the product solidifies into a gelatinized product. When placed at room temperature, the product remains in the form of a gel for at least 1 hour and then return to a fluid. This fluid can be cooled again and return to a gelatinized product.

The composition of the invention thus presents the advantages of being in a fluid or flow-able format at room temperature, of solidifying into a gel at a temperature comprised between 0°C and 10°C and of remaining a gel for at least one hour when served at room temperature.

The present invention also relates to the use of a thermoreversible alcohol-containing product according to the invention for preparing a solidified food product.

The present invention will be further illustrated in the following, nonlimiting Examples. The Examples are illustrative only and do not limit the claimed invention regarding the materials, conditions, process parameters and the like recited herein.

### Examples

### General method of preparation of the liquid composition

The first step consists in the preparation of the liquid gelling part of the composition (Part A). More precisely, cold water is disposed in a tank equipped with an overhead mixer and then the gelatin powder is slowly added to the water under agitation. The mixture is then heated to 90°C during at least 10 minutes so as to ensure that the gelatin is solubilised. The solution is then removed from the heat and allowed to cool to 55°C.

The second part of the composition (Part B) is prepared by blending together the spirit, sweetening agent, water, acidifying agent in no specific order.

Then part A is added to Part B and mixed for 40 minutes.

The solution is then allowed to cool to room temperature.

All the solutions so obtained were clear with no lumps.

### General method of preparation of the gelatinized product

The solution obtained is dispensed into a molded container and placed into the refrigerator (4°C). The product is then tested for its capacity and time needed to solidify into a gelatinized product. Then the gelatinized product is placed at room temperature. The product is then tested for its capacity to remains in the form of a gel for at least a determined period of time.

### Example 1

One liter of a first alcohol-containing gelatinized product was prepared according to the general method described above and using the components indicated in Table 1 below.

**Table 1**

| | Component | Volume/Weight | Amount in weight % |
|---|---|---|---|
| Part A | water | 450ml | 37.2% |
| | Gelatin* | 10g | 1% |
| Part B /others ingredients | water | QS for 1000ml | |
| | NGS 95% | 220ml | 21% |
| | Sucrose | 200g | 16.5% |
| | Citric acid | 0.78g | 0.06% |
| | Flavor/Color | | |
| TOTAL | | 1000ml | 100% |

| | | | |
|---|---|---|---|
| * Gelita GEL 001, 250 Bloom/40 mesh (LV LOMAS) | | | |

The final product contain 21 % abv, has a pH of 4.15 and a Brix of 25%.

The product set up into a gel in 4 hours in the refrigerator. When removed from the refrigerator, the product converts from a gel phase to a liquid phase after 1 hour at room temperature. The product does not solidify after two months at room temperature in bottle. The product exhibits good shelf life.

### Example 2

One liter of a second alcohol-containing gelatinized product was prepared according to the general method described above and using the components indicated in Table 2 below.

**Table 2**

| | Component | Volume/Weight | Amount in weight % |
|---|---|---|---|
| Part A | water | 450ml | 37.2% |
| | Gelatin* | 10g | 1% |
| Part B /others ingredients | water | QS for 1000ml | |
| | NGS 95% | 220ml | 21% |
| | Sucrose | 200g | 16.5% |
| | Citric acid | 0g | - |
| TOTAL | | 1000ml | 100% |

| | | | |
|---|---|---|---|
| * Gelita GEL 001, 250 Bloom/40 mesh (LV LOMAS) | | | |

The final product contain 21 % abv, has a pH of 5.78 and a Brix of 25%.

The product set up into a gel in 4 hours in the refrigerator. When removed from the refrigerator, the product converts from a gel phase to a liquid phase after 1 hour at room temperature. The product does solidify after two months at room temperature in bottle. The product does not exhibit a sufficient shelf life.

### Example 3

One liter of a third alcohol-containing gelatinized product was prepared according to the general method described above and using the components indicated in Table 3 below.

**Table 3**

| | Component | Volume/Weight | Amount in weight % |
|---|---|---|---|
| Part A | water | 450ml | 40.5% |
| | Gelatin* | 10g | 1% |
| Part B /others ingredients | water | QS for 1000ml | |
| | NGS 95% | 220ml | 21% |
| | HFCS | 100g | 9% |
| | Citric acid | 0.78g | 0.08% |
| TOTAL | | 1000ml | |

| | | | |
|---|---|---|---|
| * Gelita GEL 001, 250 Bloom/40 mesh (LV LOMAS) | | | |

The final product contain 21 % abv, has a pH of 4.02 and a Brix of 19%.

The product set up into a gel in 4 hours in the refrigerator. When removed from the refrigerator, the product converts from a gel phase to a liquid phase after 1 hour at room temperature. The product does not solidify after two months at room temperature in bottle. The product exhibits good shelf life.

### Example 4

One liter of several alcohol-containing gelatinized products was prepared according to the general method described above and using the components indicated in Table 4 below.

**Table 4**

| | Component | Product A Volume/Weight | Product B Volume/Weight | Product C Volume/Weight |
|---|---|---|---|---|
| Part A | water | 450ml | 450ml | 450ml |
| | Gelatin* | 10g | 10g | 10g |
| Part B /others ingredients | water | QS for 1000ml | QS for 1000ml | QS for 1000ml |
| | NGS 95% | 220ml | 220ml | 220ml |
| | **Sucrose** | **0g** | **50g** | **100g** |
| | Citric acid | 0.78g | 0.78g | 0.78g |
| TOTAL | | 1000ml | 1000ml | 1000ml |
| | **BRIX** | **9.34%** | **13.50%** | **17.47%** |

| | | | | |
|---|---|---|---|---|
| * Gelita GEL 001, 250 Bloom/40 mesh (LV LOMAS) | | | | |

The final products all contain 21 % abv, has a pH of about 4.1 (A: 4.1; B: 4.14; C: 4.14) and a Brix as indicated in Table 4.

The products all set up into a gel in 4 hours in the refrigerator. When removed from the refrigerator, the products all convert from a gel phase to a liquid phase after 1 hour at room temperature. The products do not solidify after two months at room temperature in bottle. The products exhibit good shelf life.

These three products differ from each other by the amount of sucrose added in the composition.

### Example 5

The alcohol-containing product prepared according to this example contains suspended edible food particles (coconut flakes or edible beads). During the heating cycle to a target of 85°C, sodium citrate (acidifying agent and salt at the same time) is added at a dose rate of 0.75% w/v and mixed until it is completely dissolved. Then 0.015% w/v gellan gum is slowly dispensed into the solution while shearing with a mixer. Once the gellan gum is sheared and dissolved then the gelatin is added and the general process above-mentioned is followed. The edible suspended food particles (coconut flakes or beads) are added after the filtration step and at a temperature inferior to 25°C.

If desired by the consumer, they can add their own food particle to the mix prior to the cooling stage of less than 5°C.

## Claims

1. A thermoreversible gelatinized alcohol-containing product, comprising:
- water,
- gelatin,
- spirit or ethyl alcohol, and
- an acidifying agent,
wherein the product has an alcohol strength comprised between 12 and 40% abv and a pH ≤ 5,
and wherein the product is in the form of a liquid at room temperature and in the form of a gel between 0°C and 10°C.

2. The product according to claim 1, further comprising a sweetening agent.

3. The product according to claim 1 or 2, further comprising an additional gelling agent different from gelatin.

4. The product according to any one of the preceding claims, wherein said product contains from 0.01 to 0.2 % (w/w) of said acidifying agent, preferably from 0.02 to 0.1 % (w/w).

5. The product according to any one of the preceding claims, wherein said acidifying agent is selected in the group consisting of citric acid, malic acid, tartaric acid and succinic acid.

6. The product according to any one of the preceding claims, wherein said product contains from 0.6% to 3.3% (w/w) of gelatin, preferably from 1 to 3% (w/w).

7. The product according to any one of the preceding claims, wherein said product contains a sweetening agent in a quantity such that the degree Brix of the product is comprised between 9% and 35%, preferably between 15% and 30%, more preferably between 20% and 28%.

8. The product according to any one of the preceding claims, further comprising at least one of a flavoring agent, a preservative, a salt or a food colorant, or a combination thereof.

9. The product according to any one of the preceding claims, further comprising edible food particles.

10. The product according to claim 9, further comprising gellan gum as an additional gelling agent.

11. The product according to claim 9 or 10, further comprising sodium citrate as a salt and acidifying agent.

12. A process for preparing a thermoreversible alcohol-containing product according to any one of claims 1-11.

13. Use of a thermoreversible alcohol-containing product according to any one of claims 1-11 for preparing a solidified food product.
